# EUROPEAN PATENT APPLICATION

(11) **EP 4 450 374 A1**
(43) Date of publication of application: **23.10.2024**
(21) Application number: 22906888.7
(22) Date of filing: 27.04.2022
(51) Int. Cl.: B62J 43/20, B62J 43/16, B62K 11/04

(54) **ELECTRIC VEHICLE**

(30) Priority: 15.12.2021 JP 2021203708
(71) Applicant: Yamaha Hatsudoki Kabushiki Kaisha, Iwata-shi, Shizuoka 438-8501 (JP)
(72) Inventor: MIYAZAKI, Takaaki, Iwata-shi, Shizuoka 438-8501 (JP)
(74) Representative: Grünecker Patent- und Rechtsanwälte PartG mbB
(86) International application number: PCT/JP2022/019161
(87) International publication number: WO 2023/112351

(57) **Abstract**

An electric vehicle that can realize a more desirable structure in view of detachment of a battery and battery capacity is provided. An electric motorcycle (1) has a footboard (F), a right frame front portion (33Ra) and a left frame front portion (33La) placed on the footboard (F), and a battery (13) supported by frame front portions (33R, 33L). The left and right frame front portions (33La, 33Ra) are asymmetrical about a vertical plane (Cp) passing through a center of a vehicle body in a left-right direction.

## Description

### Technical Field

The present disclosure relates to an electric vehicle.

### Background Art

JP 2004-358982 A proposes an electric motorcycle having a footboard for a rider to place their feet thereon. In the vehicle of JP 2004-358982 A, a battery is placed in the footboard and supported by left and right frames. The battery arrangement obtains the advantages that the center of gravity of the vehicle body is lowered, the weight balance in the front-back direction is optimized, a space for storage is secured under the seat, and the like.

### Summary of Invention

### Technical Problem

In JP 2004-358982 A, the left and right frames supporting the battery are formed symmetrically about a vertical plane passing through the center of the vehicle body in a left-right direction, and the battery is placed at the center of the vehicle body in the left-right direction. According to the arrangement, there is an advantage that the vehicle body structure is simpler and the manufacture thereof is easier. However, the arrangement is not necessarily the most appropriate in view of detachment of the battery and battery capacity.

### Solution to Problem

(1) An electric vehicle proposed in the present disclosure includes a footboard for a rider to place their feet thereon, a right frame portion and a left frame portion disposed in the footboard and respectively extending in a front-back direction, a rear wheel, an electric motor for driving the rear wheel, and a battery for supplying electric power to the electric motor, the battery being supported by the right frame portion and the left frame portion. Positions of the right frame portion and the left frame portion are asymmetrical about a vertical plane passing through a center of a vehicle body in a left-right direction. The configuration described above can make an electric vehicle more desirable in view of detachment of the battery and the battery capacity. For example, adjusting the height of the frame portion at one side (e.g., the right side) makes detachment of the battery toward the one side easier. In a vehicle where a component is placed only at one side (e.g., the left side) of the vehicle body frame, bending the position of the frame portion at the other side (e.g., the right side) outward (rightward) in the left-right direction can increase the battery capacity.
(2) In the electric vehicle (1), one of the right frame portion and the left frame portion may be higher than the other frame portion in at least a partial portion thereof in the front-back direction. According to the structure, the detachment of the battery toward the side at which the one frame portion is placed may be made easier.
(3) In the electric vehicle (1), one of the right frame portion and the left frame portion may be higher than the other frame portion in a center position of the battery in the front-back direction. According to the structure, the detachment of the battery toward the one side may be made easier.
(4) In the electric vehicle (1), one of the right frame portion and the left frame portion may be higher than the other frame portion over at least a half length of the battery in the front-back direction. According to the structure, the detachment of the battery toward the side at which the one frame portion is placed may be made easier.
(5) In the electric vehicle (2) to (4), a distance of the one frame portion from the vertical plane may be larger than a distance of the other frame portion from the vertical plane. According to the configuration, even when the position of the other frame portion is restricted because a structure or a component is placed at the side of the other frame portion, the battery capacity may be secured.
(6) In the electric vehicle (5), the one frame portion may be placed in a first direction from the vertical plane, and a center of the battery in the left-right direction may be located in the first direction from the vertical plane.
(7) In the electric vehicle (2) to (6), the one frame portion may be the right frame portion, and the other frame portion may be the left frame portion.
(8) In the electric vehicle (7), a stand may be attached to the left frame portion.
(9) In the electric vehicle (2) to (4), the one frame portion may be placed in a first direction from the vertical plane, and the battery may be detachable from the footboard in the first direction.
(10) In the electric vehicle (2) to (4), the footboard may have an opening that opens downward. Thus, the detachment of the battery may be made even easier.
(11) In the electric vehicle (1) to (10), a position of the right frame portion and a position of the left frame portion may be higher than a lower surface of the battery. According to the configuration, the position of the lower surface of the battery is lowered, and thereby, the battery capacity may be secured and the center of gravity of the vehicle may be lowered. Further, the positions of the left and right frame portions are higher than the lower surface of the battery, and thereby, the angle of bank of the electric vehicle may be easily secured.
(12) In the electric vehicle (1) to (11), the battery may be placed between the right frame portion and the left frame portion.
(13) In the electric vehicle (1) to (12), positions of rear parts of the right frame portion and the left frame portion may be higher than positions of front parts thereof. Further, a position of a rear portion of the battery may be higher than a front portion of the battery. According to the configuration, the battery capacity may be increased while it is easier for a rider to place their feet on the front portion of the footboard.

### Brief Description of Drawings

FIG. 1 is a perspective view showing an electric motorcycle as an example of an electric vehicle proposed in the present disclosure.
FIG. 2 is a perspective view of a vehicle body frame and a battery of the electric motorcycle in FIG. 1.
FIG. 3A is a left side view of the vehicle body frame and the battery of the electric motorcycle in FIG. 1.
FIG. 3B is a left side view of the vehicle body frame shown in FIG. 3A.
FIG. 4 is a right side view of the vehicle body frame and the battery of the electric motorcycle in FIG. 1.
FIG. 5 is a sectional view obtained along line V-V in FIG. 1. In this drawing, a sign G shows the ground.
FIG. 6A is a perspective view showing another example of the vehicle body frame.
FIG. 6B is a sectional view obtained along line VIb-VIb in FIG. 6A.
FIG. 7A is a perspective view showing yet another example of the vehicle body frame.
FIG. 7B is a sectional view of the electric motorcycle obtained along line VIIb-VIIb in FIG. 7A.

### Description of Embodiments

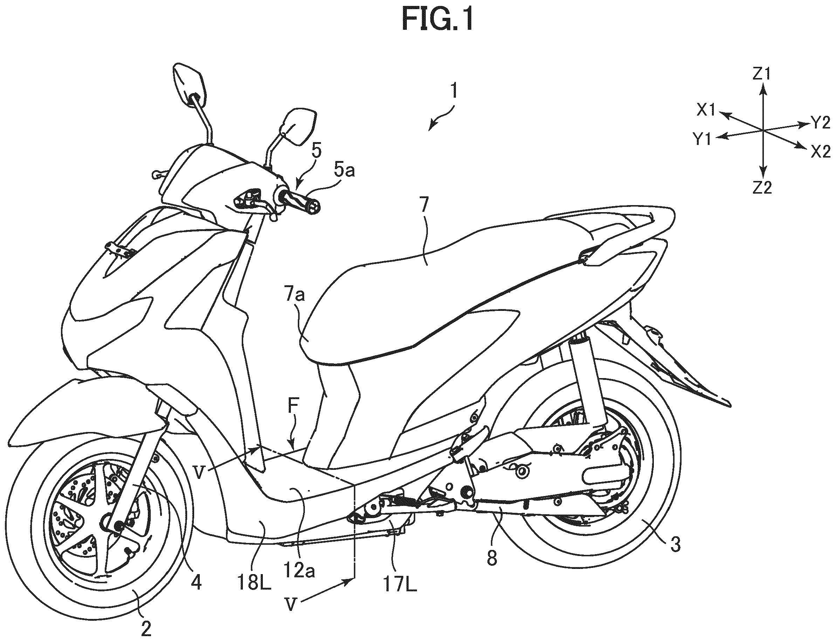

As shown below, an electric vehicle proposed in the present disclosure will be explained. FIG. 1 is a perspective view of an electric motorcycle 1 as an example of the electric vehicle proposed in the present disclosure. Hereinafter, Z1 and Z2 shown in FIG. 1 are referred to as upward and downward, respectively. Further, Y1 and Y2 shown in FIG. 1 are referred to as frontward and rearward, respectively, and X1 and X2 are referred to as rightward and leftward, respectively. Note that the structure proposed in the present disclosure is not only applied to the electric motorcycle, but may be applied to an electric tricycle (including a vehicle having left and right front wheels and one rear wheel placed at the center and a vehicle having one front wheel placed at the center and left and right rear wheels).

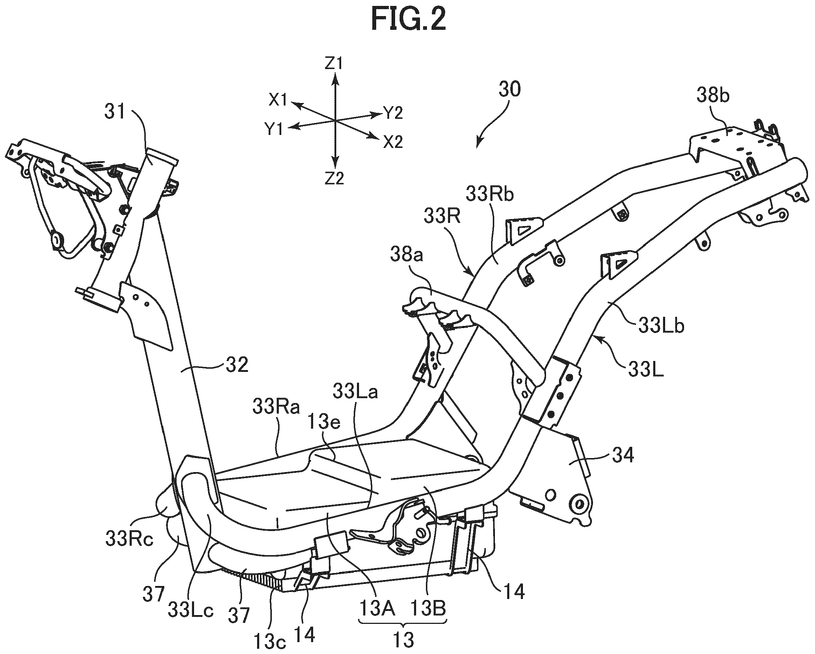

As shown in FIG. 1, the electric motorcycle 1 has a front wheel 2. The front wheel 2 is supported by the lowermost portion of a front fork 4. The front fork 4 has a steering shaft in the upper portion thereof. The steering shaft is supported by a head pipe 31 (see FIG. 2) of a vehicle body frame 30, which will be described later. A handle bar 5 is fixed to the upper portion of the steering shaft. Grips 5a are provided in the right portion and the left portion of the handle bar 5.

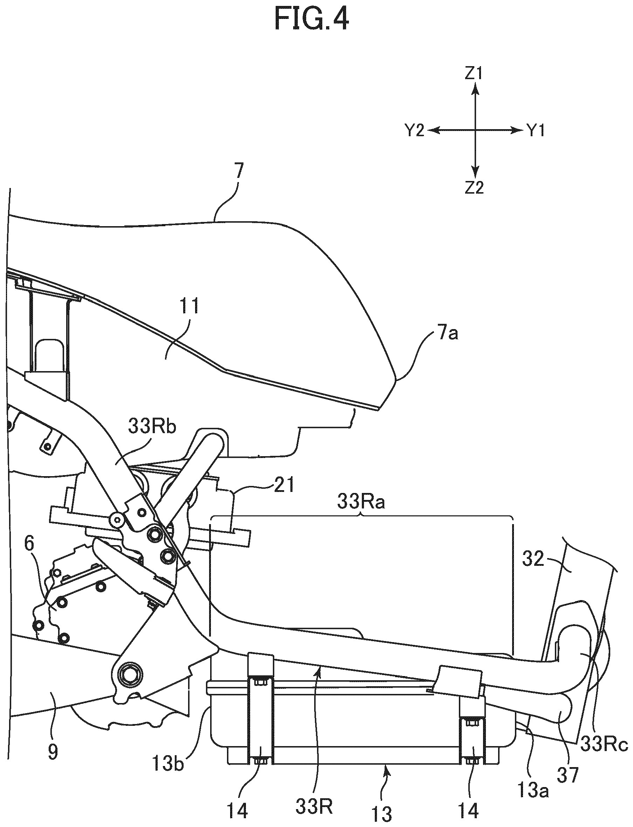

As shown in FIG. 4, the electric motorcycle 1 has an electric motor 6 for driving a rear wheel (driving wheel) 3. For example, the electric motor 6 may be placed below a seat 7. The electric motor 6 may be supported by the vehicle body frame 30. That is, the electric motor 6 may be attached to the vehicle body frame 30 by fastening devices such as bolts. In the example shown in the drawings, the electric motor 6 is attached to left and right frame portions 33L and 33R.

Output torque of the electric motor 6 is transmitted to the rear wheel 3 via a power transmission mechanism including a chain, a belt, a shaft, etc. As shown in FIG. 1, the electric motorcycle 1 may have a case 8 housing the power transmission mechanism. The case 8 is placed at the left side of the rear wheel 3. The electric motorcycle 1 may have a rear arm 9 (see FIG. 4) placed at the right side of the rear wheel 3. The wheel axle of the rear wheel 3 is supported by the case 8 and the rear arm 9. The case 8 and the rear arm 9 are movable upward and downward with the rear wheel 3 around a pivot shaft provided at the front end thereof.

The placement of the electric motor 6 is not limited to the example shown in the drawings. For example, the electric motor 6 may be provided in the rear wheel 3. That is, the electric motor 6 may be the so-called in-wheel motor.

As shown in FIG. 4, the electric motorcycle 1 may have an accommodating case 11 placed under the seat 7. The accommodating case 11 opens upward and the seat 7 may function as a lid closing the opening of the accommodating case 11. The electric motor 6 may be located below the accommodating case 11.

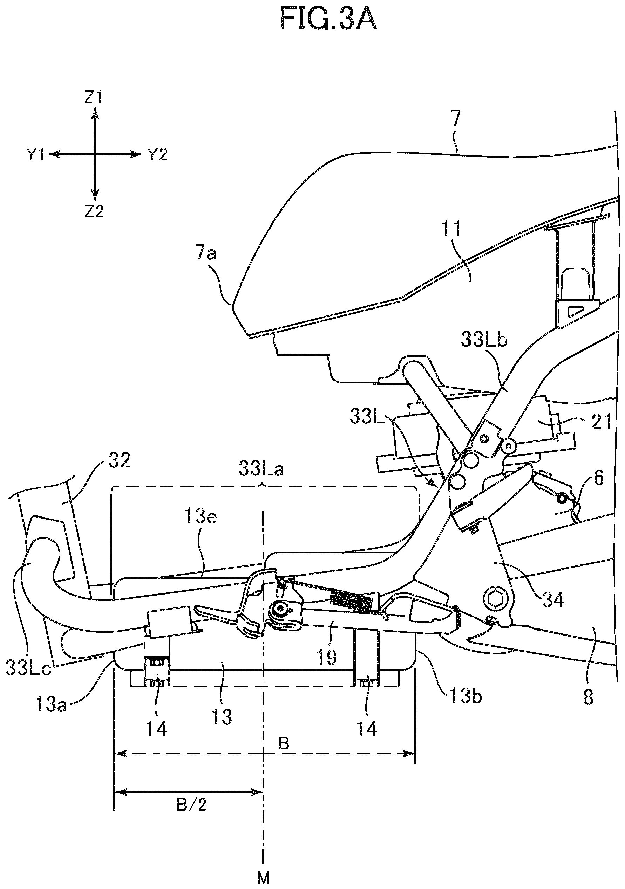

The electric motorcycle 1 has an inverter 21 for generating an alternating current for the electric motor 6 from the electric power of a battery 13. As shown in FIG. 3A, for example, the inverter 21 is placed between the accommodating case 11 and the electric motor 6. The inverter 21 may be placed between the left and right frame portions 33L and 33R and supported by the frame portions 33L and 33R. The position of the inverter 21 is not limited to the example shown in the drawings. The inverter 21 may be placed at the front side of the electric motor 6 and the rear side of the battery 13.

### [Footboard]

As shown in FIG. 1, the electric motorcycle 1 has a footboard F for a rider to place their feet thereon. The footboard F is located further forward than the seat 7 and separated below from the seat 7. The footboard F may have a portion located further rearward than a front end 7a of the seat 7. An upper surface 12a of the footboard F is lower than the upper end of the front wheel 2 and the upper end of the rear wheel 3. The footboard F is located further rearward than the front wheel 2. The upper surface 12a of the footboard F may be inclined to be gradually higher toward the rear side.

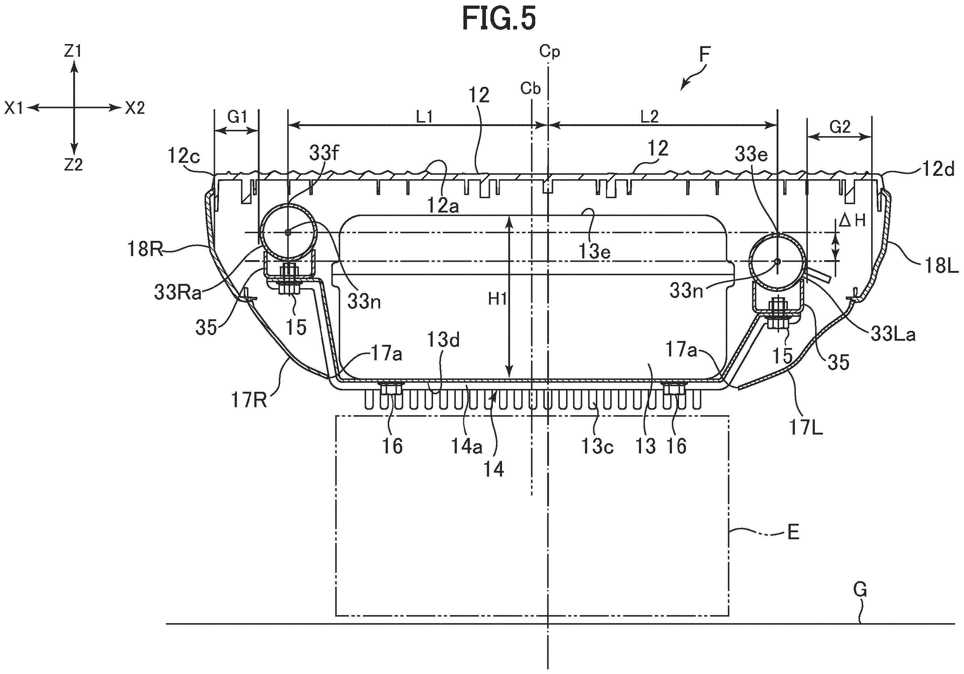

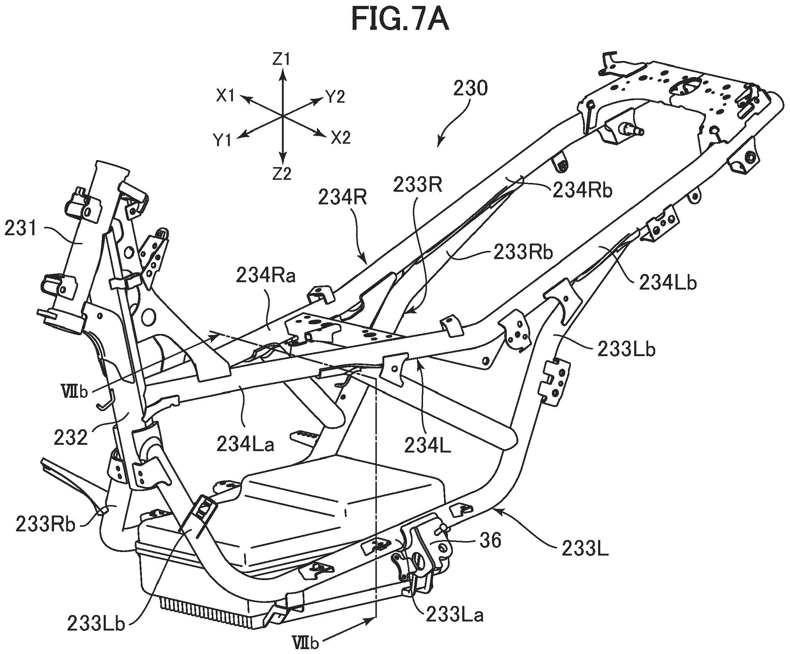

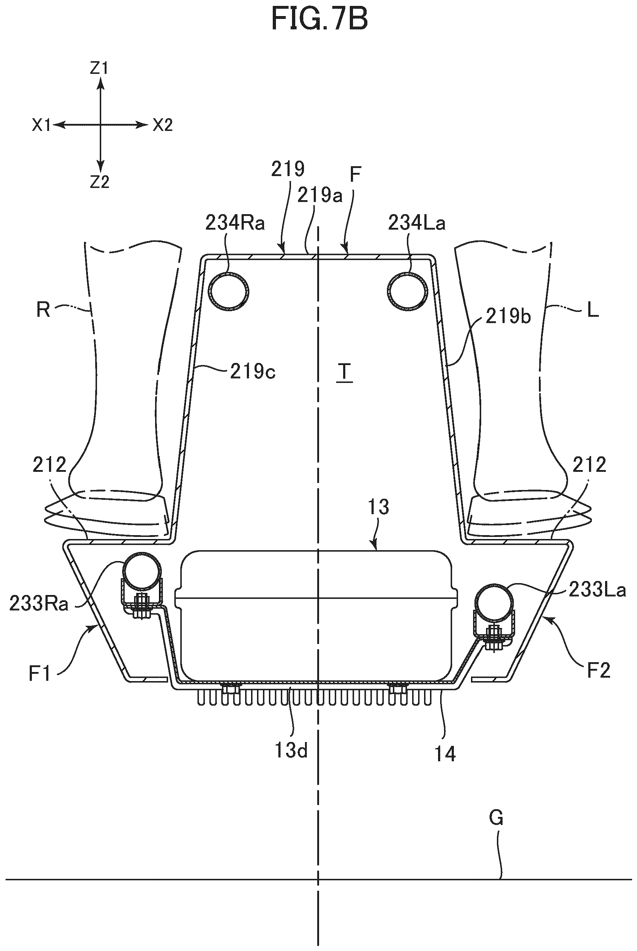

The upper surface 12a of the footboard F may be a substantially flat surface continuing from a right edge 12c (see FIG. 5) to a left edge 12d (see FIG. 5). That is, the footboard F does not necessarily have a center tunnel portion T unlike an electric motorcycle in FIGS. 7A and 7B, which will be described later.

### [Vehicle Body Frame]

As shown in FIG. 2, the vehicle body frame 30 has the head pipe 31 in the forefront portion. The head pipe 31 supports the steering shaft (not shown) provided in the upper portion of the front fork 4. The vehicle body frame 30 may have a down frame portion 32 extending rearward and downward from the head pipe 31.

As shown in FIG. 2, the vehicle body frame 30 has the right frame portion 33R and the left frame portion 33L extending rearward from the lower part of the down frame portion 32. The frame portions 33L and 33R are apart in the left-right direction. The left and right frame portions 33L and 33R have front portions 33La and 33Ra placed on the footboard F and rear portions 33Lb and 33Rb extending rearward and upward from the front portions 33La and 33Ra. For example, the frame portions 33L and 33R are tubular members. The tubular members are bent to form the frame portions 33L and 33R. The frame portions 33L and 33R have circular sections, however, they may also have rectangular sections or the like, for example. Unlike this, the frame portions 33L and 33R may be forged members or cast members.

As shown in FIG. 2, the down frame portion 32 is placed at the center in the left-right direction of the electric motorcycle 1. The left and right frame portions 33L and 33R may have forefront portions 33Lc and 33Rc bent from the front portions 33La and 33Ra toward the down frame portion 32 in the forefront parts thereof. The vehicle body frame 30 may have left and right reinforcing portions 37 located under the forefront portions 33Lc and 33Rc. The left and right reinforcing portions 37 extend from the lower end of the down frame portion 32 and respectively connect to the front portions 33La and 33Ra of the frame portions 33L and 33R. A plurality of cross bars 38a and 38b may be attached to the left and right frame portions 33L and 33R.

Hereinafter, the front portions 33La and 33Ra of the frame portions 33L and 33R are referred to as "frame front portions". Further, the rear portions 33Lb and 33Rb of the frame portions 33L and 33R are referred to as "frame rear portions".

The accommodating case 11 may be placed between the frame rear portions 33Lb and 33Rb and attached to the frame rear portions 33Lb and 33Rb. The seat 7 may be supported by the upper part of the accommodating case 11. Unlike this, the seat 7 may be directly supported by the frame rear portions 33Lb and 33Rb.

As shown in FIGS. 3A and 4, brackets 34 may be attached to the left and right frame portions 33L and 33R. The brackets 34 may be located in the forefront parts of the frame rear portions 33Lb and 33Rb. The brackets 34 extend obliquely rearward and downward from the frame rear portions 33Lb and 33Rb. The brackets 34 support the pivot shaft provided at the front end of the rear arm 9 and the front end of the case 8.

### [Battery]

The electric motorcycle 1 has the battery 13 (see FIG. 4) for supplying electric power to the electric motor 6. The battery 13 may be e.g., a lithium-ion battery, a nickel-hydrogen battery, or an all-solid-state battery, for example, and the type thereof is not limited. The electric motorcycle 1 may have a charging inlet (not shown) to which an external power supply device is connected. Further, the battery 13 may be chargeable by the electric power supplied from an external battery charger. Unlike this, the electric motorcycle 1 does not necessarily have the charging inlet. In this case, the battery 13 may be detached from the vehicle body each time the battery 13 is charged.

As shown in FIGS. 3A and 4, the battery 13 is placed between the left and right frame front portions 33La and 33Ra and at least a part thereof is located in the footboard F. According to the placement of the battery 13, the center of gravity of the vehicle body may be made lower and the weight balance in the front-back direction may be optimized. As shown in FIG. 4, the front portion of the battery 13 may be located further forward than the front end 7a of the seat 7 and the rear portion of the battery 13 may be located below the seat 7. Unlike this, the entire battery 13 may be located further forward than the front end 7a of the seat 7.

In the example shown in FIG. 2, the battery 13 has a front portion 13A and a rear portion 13B different in height H1 (see FIG. 5). The height of the rear portion 13B is larger than that of the front portion 13A. Unlike the example shown in FIG. 2, the height H1 of the battery 13 may be substantially uniform from the front end to the rear end thereof.

### [Left and Right Frame Portions]

In FIG. 5, a line Cp shows a vertical plane passing through the center of the vehicle body in the left-right direction. The center vertical plane Cp is a plane passing through the center of the front wheel 2 and the rear wheel 3 in the left-right direction and perpendicular to the wheel axles thereof. The positions of the left and right frame front portions 33La and 33Ra are asymmetrical about the center vertical plane Cp. That is, a distance L2 from the vertical plane Cp to the left frame front portion 33La, and a distance L1 from the vertical plane Cp to the right frame front portion 33Ra, are different and/or the position of the left frame front portion 33La in the vertical direction (upward or downward direction) and the position of the right frame front portion 33Ra in the same direction are different.

In the description, "the positions of the frame front portions 33La and 33Ra" refer to e.g., positions of center lines 33n (see FIG. 5, center lines of the tubular members) thereof. In this specification, the frame front portions 33La and 33Ra may be ranges corresponding to a front end 13a to a rear end 13b of the battery 13.

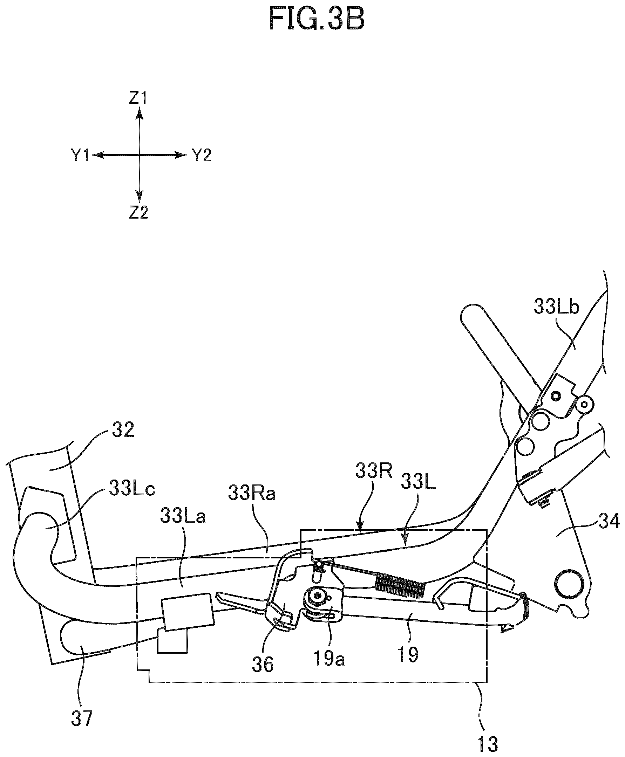

As shown in FIG. 5, the position of the right frame front portion 33Ra is higher than the position of the left frame front portion 33La. In detail, the position of the right frame front portion 33Ra may be higher than the position of the left frame front portion 33La over an entire range B (FIGS. 3A and 3B) of the battery 13 in the front-back direction. That is, a height difference ΔH between the left and right frame front portions 33La and 33Ra may be provided in a range from the front end 13a to the rear end 13b of the battery 13 or beyond the range. According to the placement of the frame front portions 33La and 33Ra, the battery 13 may be easily detached from the electric motorcycle 1 for maintenance or replacement of the battery 13.

### [Supporting Structure and Detachment of Battery]

The battery 13 is supported by the frame front portions 33Ra and 33La. As shown in FIG. 5, for example, the battery 13 may be supported via a stay 14. The stay 14 may be provided over the left and right frame front portions 33La and 33Ra. In the example shown in the drawings, the left end and the right end of the stay 14 are respectively fastened to brackets 35 fixed (e.g., welded) to the left and right frame front portions 33La and 33Ra by bolts 15. The stay 14 has a supporting portion 14a located in a lower position than the left and right ends thereof and is substantially horizontal. The battery 13 is placed on the upper side of the supporting portion 14a. A lower surface 13d of the battery 13 may be fixed to the supporting portion 14a by bolts 16. A plurality of the stays 14 (e.g., two stays 14) may be placed apart in the front-back direction.

For example, detaching the battery 13 from the electric motorcycle 1 is performed in the following manner. First, a worker detaches a cover covering the frame front portions 33La and 33Ra from another exterior member. In the example shown in the drawings, the footboard F has covers 17L and 17R covering the lower parts of the frame front portions 33La and 33Ra and covers 18L and 18R covering side parts of the frame front portions 33La and 33Ra as exterior members. The covers 17L and 17R are attached to the lower edges of the covers 18L and 18R, respectively. The worker detaches the covers 17L and 17R from the covers 18L and 18R. Further, the worker places a platform E under the battery 13. The upper surface of the platform E may be movable upward and downward. Then, the worker detaches the bolts 15 from the brackets 35 of the frame front portions 33La and 33Ra. Thereby, the battery 13 and the stay 14 are detached from the frame front portions 33La and 33Ra and mounted on the platform E. The worker moves the platform E to the right side. In the electric motorcycle 1, the position of the right frame front portion 33Ra is higher than the left frame front portion 33La, and detaching the battery 13 to the right side of the electric motorcycle 1 may be made easier. Note that the electric motorcycle 1 has the charging inlet as described above. The battery 13 is not detached in normal use of the electric motorcycle 1, but detached, for example, in case of failure or for maintenance.

Attaching the battery 13 to the electric motorcycle 1 may be executed in the reverse procedure to that of the detachment work. The position of the right frame front portion 33Ra is higher than the left frame front portion 33La, and thereby, the work to attach the battery 13 may be made easier.

### [Distances of Frame Portions from Center in Left-right Direction]

The frame front portions 33Ra and 33La are placed along the side surfaces of the battery 13. That is, the frame front portions 33Ra and 33La may be substantially parallel to the side surfaces of the battery 13. As shown in FIG. 5, the distance L1 from the center vertical plane Cp of the electric motorcycle 1 to the right frame front portion 33Ra is larger than the distance L2 from the same vertical plane Cp to the left frame front portion 33La. Accordingly, a gap G2 between the left frame front portion 33La and the left cover 18L is larger than a gap G1 between the right frame front portion 33Ra and the right cover 18R. Thereby, reduction of an angle of bank at the left side (an allowable inclination angle to the left side) of the electric motorcycle 1 may be suppressed, and various structures and components may be placed at the left side of the left frame front portion 33La.

For example, as shown in FIGS. 3A and 3B, a base portion 19a of a side stand 19 for supporting the electric motorcycle 1 in a tilted state and a bracket 36 to which the base portion 19a is attached may be placed at the left side of the left frame front portion 33La. The bracket 36 is fixed to a side part of the frame front portion 33La. The side stand 19 is placed along the side surface of the battery 13. The base portion 19a and the bracket 36 may be exposed from the cover 17L. The component placed at the left side of the left frame front portion 33La is not limited to the side stand 19, but e.g., an electric cable may be placed there.

As described above, the distance L1 from the center vertical plane Cp to the right frame front portion 33Ra is larger than the distance L2 from the same vertical plane Cp to the left frame front portion 33La. As shown in FIG. 5, a center Cb of the battery 13 in the left-right direction shifts rightward from the center vertical plane Cp of the vehicle body. That is, the position of the battery 13 shifts from the center of the vehicle body according to the positions of the left and right frame front portions 33La and 33Ra. In the electric motorcycle 1, the distance L1 is larger than the distance L2 over the entire range B of the battery 13. Thereby, the battery 13 can be efficiently placed between the left and right frame front portions 33La and 33Ra. The distance between the left and right frame front portions 33La and 33Ra corresponds to the width of the battery 13 in the left-right direction. Thereby, when the stay 14 is detached, the battery 13 may be moved downward without interference between the battery 13 and the frame front portions 33La and 33Ra.

As shown in FIG. 5, the position of the right frame front portion 33Ra has the larger distance from the center vertical plane Cp than that of the left frame front portion 33La and is higher than the position the left frame front portion 33La. Accordingly, an angle of bank on the right side (an allowable inclination angle to the right side) of the electric motorcycle 1 is prevented from being reduced. That is, when the right frame front portion 33Ra at the larger distance from the center vertical plane Cp is placed at the same height as that of the left frame front portion 33La, the angle of bank at the right side is restricted by the right frame front portion 33Ra. In the electric motorcycle 1, the reduction of the angle of bank may be avoided by raising the position of the right frame front portion 33Ra.

Note that, in contrast to the example shown in the drawings, the distance L2 from the center vertical plane Cp to the left frame front portion 33La may be larger than the distance L1 from the same vertical plane Cp to the right frame front portion 33Ra. In this case, the position of the left frame front portion 33La may be higher than the position of the right frame front portion 33Ra.

### [Details of Positions of Left and Right Frame Portions]

The above described difference between the distances L1 and L2 (see FIG. 5) may be provided over the entire range B of the battery 13. The difference may be smaller than diameters of the frame front portions 33Ra and 33La. Further, the difference between the distances L1 and L2 may be larger than radii of the frame front portions 33Ra and 33La. As described above, the difference between the distances L1 and L2 is smaller, and thereby, the weight balance in the left-right direction may be secured more easily. Note that the difference between the distances L1 and L2 may be uniform or be changed in the entire range B of the battery 13 in the front-back direction.

Further, as shown in FIG. 5, for example, the difference ΔH between the positions of the right frame front portion 33Ra and the left frame front portion 33La may be smaller than the diameters of the frame front portions 33La and 33Ra. Further, the difference ΔH may be larger than the radii of the frame front portions 33La and 33Ra. The difference ΔH between the positions of the frame front portions 33La and 33Ra may be uniform in the entire range B (see FIG. 3A) of the battery 13 in the front-back direction or changed depending on the position in the front-back direction.

Note that the position relationship between the left and right frame front portions 33La and 33Ra is not limited to the example described here. For example, the above described difference ΔH between the positions may be larger than the diameters of the frame front portions 33Ra and 33La. Further, the difference between the distances L1 and L2 may be larger than the diameters of the frame front portions 33Ra and 33La.

In the example shown in FIGS. 2 to 5, the right frame front portion 33Ra is higher than the left frame front portion 33La in the entire range B of the battery 13. Unlike this, the right frame front portion 33Ra may be higher than the left frame front portion 33La only in a partial range of the battery 13 in the front-back direction. In other words, in a partial range of the battery 13 in the front-back direction, the left and right frame front portions 33La and 33Ra may be located substantially at the same height or the height relationship may be inverted.

For example, in a range of a half of the battery 13 in the front-back direction (B/2) or in a range larger than the half, the right frame front portion 33Ra may be higher than the left frame front portion 33La. In the other ranges, the frame front portions 33La and 33Ra may be located substantially at the same height. For example, the position of the right frame front portion 33Ra may be higher than the left frame front portion 33La in a range of the front half part or larger than the front half part of the battery 13, but may be located substantially at the same height in the rearmost part of the battery 13. Here, the front half part of the battery 13 refers to a part further forward than a center M of the battery 13 in the front-back direction (see FIG. 3A).

As another example, the position of the right frame front portion 33Ra may be higher than the left frame front portion 33La in the position at the center M of the battery 13 in the front-back direction. On the other hand, in the position of the front end 13a and/or the position of the rear end 13b of the battery 13, the left and right frame front portions 33La and 33Ra may be located substantially at the same height.

The modification of the heights of the frame front portions 33Ra and 33La may be applied to the distances between the frame front portions 33Ra and 33La and the center vertical plane Cp. That is, unlike the example in FIGS. 2 to 5, the distance L1 may be larger than the distance L2 only in a major part of the battery 13 in the front-back direction. In other words, the distance L1 may be the same as the distance L2 in a partial range of the battery 13 in the front-back direction.

### [Exposure of Lower Surface of Battery]

As shown in FIG. 5, the lower surface 13d of the battery 13 may be exposed at the downward facing side of the footboard F. In the example shown in the drawings, the footboard F has an opening between lower edges 17a (see FIG. 5) of the left and right covers 17L and 17R. The lower surface 13d of the battery 13 is exposed between the lower edges 17a. According to the structure of the footboard F, the battery 13 may be efficiently cooled. Further, detaching the battery 13 may be made easier.

As shown in FIG. 5, the battery 13 may have a fin 13c on the lower surface 13d thereof. The fin 13c may be exposed downward from the footboard F. Thereby, the battery 13 may be cooled more efficiently.

As shown in FIG. 5, the upper part of the battery 13 is covered by an upper panel 12. The upper panel 12 also covers the upper part of the right frame front portion 33Ra and the upper part of the left frame front portion 33La. The rider may place their feet on the upper panel 12.

### [Height Relationship between Battery and Frame Portions]

As shown in FIG. 5, the positions of the left and right frame front portions 33La and 33Ra are higher than the lower surface 13d of the battery 13. Thereby, the angle of bank of the electric motorcycle 1 may be secured while the center of gravity of the vehicle body of the electric motorcycle 1 is made lower.

As shown in FIG. 5, an upper end 33e on the outer circumferential surface of the left frame front portion 33La is lower than an upper surface 13e of the battery 13. On the other hand, the position of an upper end 33f on the outer circumferential surface of the right frame front portion 33Ra is at substantially the same height as that of the upper surface 13e of the battery 13 or higher than the upper surface 13e of the battery 13. Unlike this, the position of the upper surface 13e of the battery 13 may be higher than both of the upper ends 33e and 33f of the left and right frame front portions 33La and 33Ra.

As shown in FIG. 2, the frame front portions 33La and 33Ra are inclined with respect to the horizontal plane and the positions thereof are gradually higher rearward from the front ends thereof. That is, the rear parts of the frame front portions 33La and 33Ra are higher than the positions of the front parts thereof. Further, the upper surface 12a of the footboard F (see FIG. 1) is gradually higher rearward from the front end thereof. Thereby, the rider may comfortably place their feet on the footboard F.

As shown in FIG. 2, a step is formed in the upper surface 13e of the battery 13, and thus the height H1 of the rear portion 13B of the battery 13 (see FIG. 5, the distance from the lower surface 13d to the upper surface 13e) is higher than the height of the front portion 13A of the battery 13. According to the structure, the capacity of the battery 13 may be increased. Further, according to the structure, the position of the front part of the upper surface 12a of the footboard F can be maintained to be lower, and thus the ease of placing the feet of the rider on the footboard F can be maintained. Note that, unlike the upper surface 13e, the lower surface 13d of the battery 13 may be at the same height in the front portion 13A and the rear portion 13B of the battery 13.

A plurality of steps may be formed in the upper surface 13e of the battery 13. For example, two steps may be formed in the upper surface 13e of the battery 13. In this case, the height H1 of the center portion of the battery 13 may be larger than the height of the front portion, and the height of the rear portion of the battery 13 may be larger than the height of the center portion.

### [Modified Example 1]

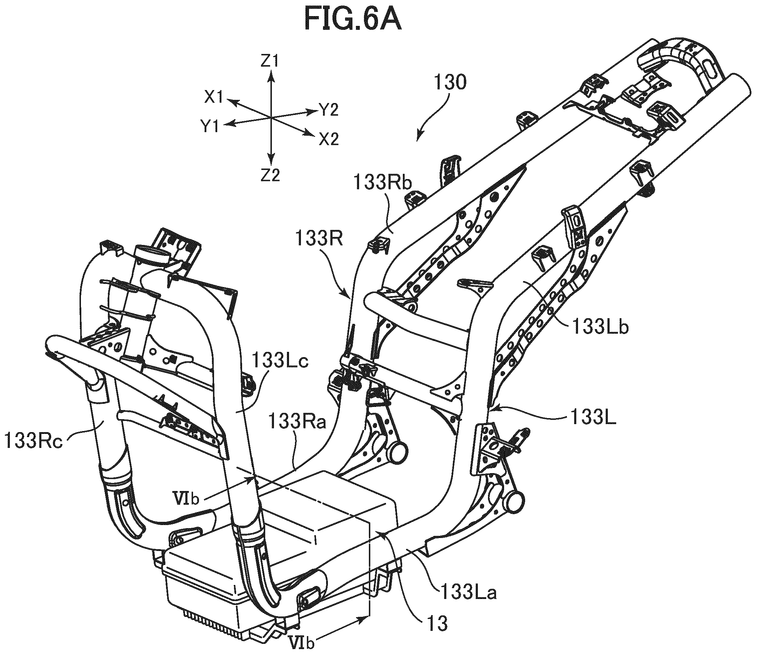

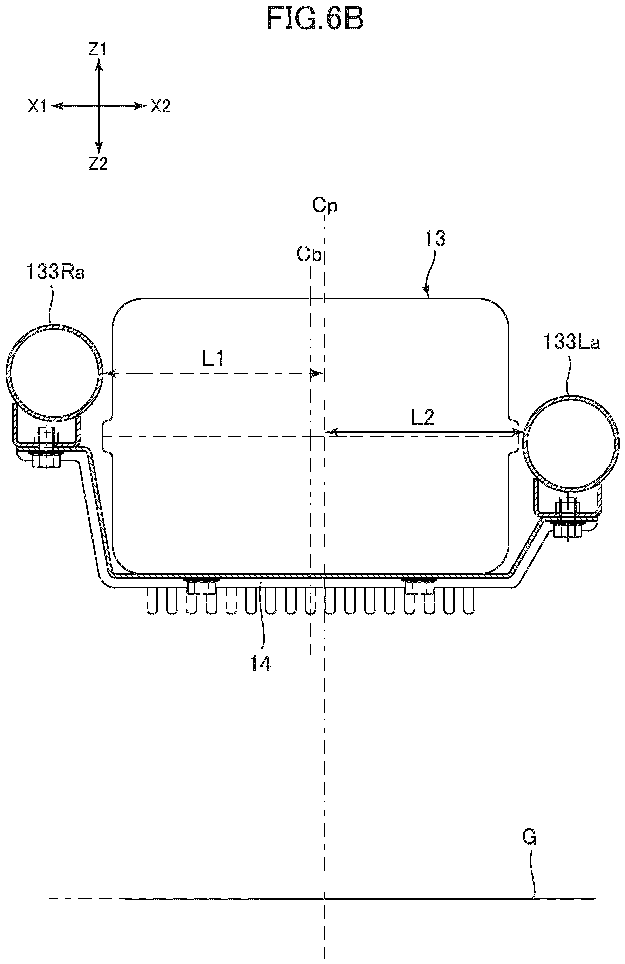

The electric motorcycle proposed in the present disclosure is not limited to the example shown in FIGS. 2 to 5. FIGS. 6A and 6B show another example of placement of the vehicle body frame and the battery. As shown below, the example shown by these drawings will be explained mainly on differences from the example shown in FIGS. 2 to 5. The structures described in FIGS. 2 to 5 may be applied to structures of the example shown in FIGS. 6A and 6B without an explanation about the structures.

A vehicle body frame 130 shown in FIG. 6A has left and right frame portions 133L and 133R. Unlike the example shown in FIG. 2 etc., in the vehicle body frame 130, the left and right frame portions 133L and 133R have left and right down frame portions 133Lc and 133Rc, respectively. Upper ends of the down frame portions 133Lc and 133Rc are connected to the head pipe 31.

Like the example shown in FIG. 2 etc., the frame portions 133L and 133R have frame front portions 133La and 133Ra placed on the footboard F, respectively. The left and right frame front portions 133La and 133Ra extend rearward from the down frame portions 133Lc and 133Rc. As shown in FIG. 6B, the battery 13 is placed between the frame front portions 133La and 133Ra.

As shown in FIG. 6B, the position of the right frame front portion 133Ra is higher than the position of the left frame front portion 133La. Further, a distance L1 from the center vertical plane Cp to the right frame front portion 133Ra is larger than a distance L2 from the center vertical plane Cp to the left frame front portion 133La. Accordingly, the center Cb of the battery 13 in the left-right direction shifts rightward from the center vertical plane Cp of the vehicle body.

### [Modified Example 2]

FIGS. 7A and 7B show yet another example of placement of the vehicle body frame and the battery. As shown below, the example shown by these drawings will be explained mainly with respect to the differences from the example shown in FIGS. 2 to 5. The structures described in FIGS. 2 to 5 may be applied to structures of the example shown in FIGS. 7A and 7B without an explanation about the structures.

As shown in FIG. 7A, a vehicle body frame 230 has a down frame portion 232 extending obliquely downward from a head pipe 131. Left and right frame portions 233L and 233R have front inclined portions 233Ld and 233Rd extending downward from the lowermost part of the down frame portion 232 and frame front portions 233La and 233Ra bent and extending rearward from the front inclined portions 233Ld and 233Rd. Like the example shown in FIG. 2 etc., the left and right frame front portions 233La and 233Ra are placed in the footboard F. The battery 13 is placed between the left and right frame front portions 233La and 233Ra. As shown in FIG. 7B, the position of the right frame front portion 233Ra is higher than the position of the left frame front portion 233La.

As shown in FIG. 7A, the vehicle body frame 230 has upper frame portions 234L and 234R extending rearward from the down frame portion 232. The upper frame portions 234L and 234R have front portions 234La and 234Ra located above the frame front portions 233La and 233Ra. The front portions 234La and 234Ra are respectively inclined leftward and rightward so that the distance therebetween may be gradually larger to the rear side. Rear portions 234Lb and 234Rb of the upper frame portions 234L and 234R are connected to left and right frame rear portions 233Lb and 233Rb, respectively.

As shown in FIG. 7B, in the electric motorcycle having the vehicle body frame 230, the footboard F may have left and right side portions F2 and F1. The left and right side portions F2 and F1 are formed along the frame front portions 233La and 233Ra. The respective side portions F2 and F1 have upper panels 212 for the rider to place their left and right feet (L and R) thereon. The upper panels 212 are placed along the upper parts of the frame front portions 233La and 233Ra. The upper panels 212 may be supported by the frame front portions 233La and 233Ra.

As shown in FIG. 7B, in the electric motorcycle having the vehicle body frame 230, the center tunnel portion T may be provided between the left and right side portions F2 and F1. The center tunnel portion T has a center cover 219 located between the left and right side portions F2 and F1 and surrounding the above described upper frame portions 234L and 234R. The center cover 219 respectively has an upper panel 219a covering the upper parts of the upper frame portions 234L and 234R and side panels 219b and 219c extending downward from the left and right edges of the upper panel 219a. The rider places their left and right feet (L and R) on the side portions F2 and F1 with the center tunnel portion T sandwiched by the left and right feet (L and R). A part (upper part) of the battery 13 may be located in the center tunnel portion T. In this case, the upper surface of the battery 13 may be higher than both of the left and right frame front portions 233La and 233Ra.

As shown in FIG. 7B, in the electric motorcycle having the vehicle body frame 230, the footboard F also has an opening that opens downward. That is, the opening is provided between the side portions F2 and F1 and the lower surface 13d of the battery 13 is exposed from the opening.

### [Summary]

(1) The electric motorcycle proposed in the present disclosure includes the footboard F for the rider to place their feet thereon, the right frame portion (more specifically, the frame front portions 33Ra, 133Ra and 233Ra) and the left frame portion (more specifically, the frame front portions 33La, 133La and 233La) disposed in the footboard F and respectively extending in a front-back direction, the rear wheel 3, the electric motor 6 for driving the rear wheel 3, and the battery 13 supported by the right frame front portions 33Ra, 133Ra and 233Ra and the left frame front portions 33La, 133La and 233La. Positions of the right frame front portions 33Ra, 133Ra and 233Ra and positions of the left frame front portions 33La, 133La and 233La are asymmetrical about the vertical plane Cp passing through the center of the vehicle body in the left-right direction.

According to the configuration, in view of detachment of the battery 13 and battery capacity, a more desirable electric motorcycle can be obtained. For example, adjusting the heights of the right frame front portions 33Ra, 133Ra and 233Ra makes detachment of the battery 13 toward the right side easier. Further, when a component is placed at the left side of the vehicle body frames 30, 130 and 230, the right frame front portions 33Ra, 133Ra and 233Ra may bend outwards (rightward) in the left-right direction, and thereby, the battery capacity can be increased.

(2) The right frame front portions 33Ra, 133Ra and 233Ra are higher than the left frame front portions 33La, 133La and 233La in at least a partial portion thereof in the front-back direction. According to the structure, the detachment of the battery 13 toward the right side may be made easier.

(3) The right frame front portions 33Ra, 133Ra and 233Ra are higher than the left frame front portions 33La, 133La and 233La in the position at the center M of the battery 13 in the front-back direction. According to the structure, the detachment of the battery 13 toward the right side may be made easier.

(4) The right frame front portions 33Ra, 133Ra and 233Ra are higher than the left frame front portions 33La, 133La and 233La over at least a half length (B/2) of the battery 13 in the front-back direction. According to the structure, the detachment of the battery 13 toward the right side can be made easier.

(5) The distances L1 of the right frame front portions 33Ra, 133Ra and 233Ra from the vertical plane Cp are larger than the distances L2 of the left frame front portions 33La, 133La and 233La from the vertical plane Cp. According to the configuration, even when the positions of the left frame front portions 33La, 133La and 233La are restricted because a structure or a component is placed at the left side, the battery capacity may be increased.

(6) The right frame front portions 33Ra, 133Ra and 233Ra are placed at the right side from the vertical plane Cp, and the center Cb of the battery 13 in the left-right direction is located at the right side from the vertical plane Cp.

(7) Of the left and right frame front portions, the right frame front portions 33Ra, 133Ra and 233Ra are higher than the positions of the left frame front portions 33La, 133La and 233La.

(8) Further, the stand 19 is attached to the left frame front portions 33La, 133La and 233La.

(9) The right frame front portions 33Ra, 133Ra and 233Ra are placed at the right side from the vertical plane Cp and the battery 13 is detachable from the footboard F toward the right side.

(10) The footboard F has an opening that opens downward. Thereby, the detachment of the battery 13 may be made easier.

(11) Positions of the right frame front portions 33Ra, 133Ra and 233Ra and positions of the left frame front portions 33La, 133La and 233La are higher than the lower surface 13d of the battery 13. According to the configuration, the position of the lower surface 13d of the battery 13 is lowered, and thereby, the battery capacity may be secured and the center of gravity of the vehicle may be made lower. Further, the positions of the left and right frame front portions are higher than the lower surface 13d of the battery 13, and thereby, the angle of bank of the electric motorcycle may be secured.

(12) The battery 13 is placed between the right frame front portions 33Ra, 133Ra and 233Ra and the left frame front portions 33La, 133La and 233La. According to the configuration, the battery capacity may be secured and the center of gravity of the vehicle may be made lower. Further, the angle of bank of the electric motorcycle may be secured.

(13) The positions of the rear parts of the right frame front portions 33Ra, 133Ra and 233Ra and the left frame front portions 33La, 133La and 233La are higher than the positions of the front parts thereof. Further, the height H1 of the rear portion 13B of the battery 13 is larger than that of the front portion 13A of the battery 13. According to the configuration, the capacity of the battery 13 may be increased while the ease of placement of a rider's feet on the front portion of the footboard F is maintained.

### [Others]

Note that the electric vehicle proposed in the present disclosure is not limited to the above described electric motorcycle.

For example, in the above described electric motorcycle, the positions of the right frame front portions 33Ra, 133Ra and 233Ra are higher than those of the left frame front portions 33La, 133La and 233La. In contrast, the left frame front portions 33La, 133La and 233La may be higher than the positions of the right frame front portions 33Ra, 133Ra and 233Ra. Detachment of the battery 13 toward the left side may be made easier. Further, in this case, the distances L2 of the left frame front portions 33La, 133La and 233La from the vertical plane Cp may be larger than the distances L1 of the right frame front portions 33Ra, 133Ra and 233Ra from the vertical plane Cp. According to the configuration, even when the positions of the right frame front portions 33Ra, 133Ra and 233Ra are restricted because a structure or a component is placed at the right side, the battery capacity may be increased.

In the above described electric motorcycle, the distance L2 from the vertical plane Cp to the left frame front portion 33La and the distance L1 from the vertical plane Cp to the right frame front portion 33Ra are different and, in addition, the position of the left frame front portion 33La in the vertical direction (upward or downward direction) and the position of the right frame front portion 33Ra in the same direction are different. Unlike this, the distances L2 and L1 are different, but the position of the left frame front portion 33La in the vertical direction (upward or downward direction) and the position of the right frame front portion 33Ra in the same direction may be substantially the same. In contrast, the distances L2 and L1 are substantially the same, but the position of the left frame front portion 33La in the vertical direction (upward or downward direction) and the position of the right frame front portion 33Ra in the same direction may be different.

In the example shown in FIGS. 2 to 5, the frame rear portions 33Lb and 33Rb are symmetrical about the center vertical plane Cp. However, these frame rear portions 33Lb and 33Rb may be asymmetrical about the center vertical plane Cp like the frame front portions 33La and 33Ra.

## Claims

1. An electric vehicle comprising:
a footboard for an rider to place feet thereon;
a right frame portion and a left frame portion disposed in the footboard and respectively extending in a front-back direction;
a rear wheel;
an electric motor for driving the rear wheel; and
a battery for supplying electric power to the electric motor, the battery being supported by the right frame portion and the left frame portion, wherein
positions of the right frame portion and the left frame portion are asymmetrical about a vertical plane passing through a center of a vehicle body in a left-right direction.

2. The electric vehicle according to claim 1, wherein
one of the right frame portion and the left frame portion is higher than the other frame portion in at least a partial portion thereof in the front-back direction.

3. The electric vehicle according to claim 1, wherein
one of the right frame portion and the left frame portion is higher than the other frame portion in a center position of the battery in the front-back direction.

4. The electric vehicle according to claim 1, wherein
one of the right frame portion and the left frame portion is higher than the other frame portion over at least a half length of the battery in the front-back direction.

5. The electric vehicle according to any one of claims 2 to 4, wherein
a distance of the one frame portion from the vertical plane is larger than a distance of the other frame portion from the vertical plane.

6. The electric vehicle according to claim 5, wherein
the one frame portion is placed in a first direction from the vertical plane, and
a center of the battery in the left-right direction is located in the first direction from the vertical plane.

7. The electric vehicle according to any one of claims 2 to 6, wherein
the one frame portion is the right frame portion, and
the other frame portion is the left frame portion.

8. The electric vehicle according to claim 7, wherein
a stand is attached to the left frame portion.

9. The electric vehicle according to any one of claims 2 to 4, wherein
the one frame portion is placed in a first direction from the vertical plane, and
the battery is detachable from the footboard in the first direction.

10. The electric vehicle according to any one of claims 2 to 4, wherein
the footboard has an opening that opens downward.

11. The electric vehicle according to any one of claims 1 to 10, wherein
a position of the right frame portion and a position of the left frame portion are higher than a lower surface of the battery.

12. The electric vehicle according to any one of claims 1 to 11, wherein
the battery is placed between the right frame portion and the left frame portion.

13. The electric vehicle according to any one of claims 1 to 12, wherein
positions of rear parts of the right frame portion and the left frame portion are higher than positions of front parts thereof, and
a height of a rear portion of the battery is larger than that of a front portion of the battery.
